# EUROPEAN PATENT APPLICATION

(11) **EP 3 422 552 A1**
(43) Date of publication of application: **02.01.2019**
(21) Application number: 16897076.2
(22) Date of filing: 13.12.2016
(51) Int. Cl.: H02M 7/48

(54) **ELECTRIC POWER CONVERSION DEVICE**

(30) Priority: 29.03.2016 JP 2016065545
(71) Applicant: Hitachi-Johnson Controls Air Conditioning, Inc., Tokyo 105-0022 (JP)
(72) Inventor: HATTORI, Yukio, Tokyo 100-8280 (JP); MIURA, Shin, Tokyo 105-0022 (JP); OOISHI, Takashi, Tokyo 105-0022 (JP); HASHIMOTO, Takayuki, Tokyo 105-0022 (JP)
(74) Representative: MERH-IP Matias Erny Reichl Hoffmann Patentanwälte PartG mbB
(86) International application number: PCT/JP2016/087059
(87) International publication number: WO 2017/168860

(57) **Abstract**

In a power converter provided with a current detection circuit on a DC bus, the precision with which the current value is detected by the current detection circuit is enhanced. The power semiconductor module is connected between the wiring pattern of the positive potential of the DC bus and the wiring pattern of the negative potential thereof; the smoothing capacitor and the snubber capacitor are connected between the wiring pattern of the positive potential of the DC bus and the wiring pattern of the negative potential thereof. The current detection circuit is connected between the power semiconductor module and the snubber capacitor employing the wiring pattern of the negative potential of the DC bus. The positive terminal of the smoothing capacitor and the positive terminal of the snubber capacitor, the negative terminal of the smoothing capacitor and the negative terminal of the snubber capacitor, the positive terminal of the power semiconductor module and the positive terminal of the snubber capacitor and the negative terminal of the power semiconductor module, and the first terminal of the current detection circuit are respectively disposed in the vicinity of each other.

## Description

### Technical Field

The present invention relates to a power converter provided with a current detection circuit on a DC bus.

### Background Art

As one of the background art documents in the present technical field, the international application publication No. WO2003/032478 (PTL 1) is exemplified, in which there is disclosure such that for the purpose of providing a phase current detection device allowing ringing to be suppressed so as to take in electric current with high speed and high precision, a first capacitor (smoothing capacitor) 2a being interconnected between output terminals of a rectification circuit 2 which receives an AC power from an AC power source 1 as an input; a three-phase inverter 3 being connected in parallel with the first capacitor 2a; the output of the three-phase inverter 3 being supplied to a motor 4; a second capacitor 3a being connected in parallel with the input side of the three-phase inverter 3; a current detector 5 being interconnected between the first capacitor 2a and the second capacitor 3a; a third capacitor is connected in parallel with the first capacitor 2a slightly nearer to the power source side than the current detector 5, thereby, the capacitance of the second capacitor 3a being reduced as small as possible in such a range as power devices being not damaged by surge voltage resulting from switching.

### Citation List

### Patent Literature

PTL: International Patent Application Publication No. WO2003/032478

### Summary of Invention

### Technical Problem

Generally speaking, because the smoothing capacitor is a capacitor whose capacitance is large, such measures are taken as the smoothing capacitor board and the inverter circuit board being arranged with separate boards; and such boards being connected with each other with a cable. Upon the semiconductor devices within the inverter circuit being switched on, resonant current occurs among the smoothing capacitor, the cable, the wiring patterns of the inverter circuit board, the semiconductor devices and the current detection circuit. This resonant current is caused by a series resonant circuit being formed with junction capacitance inherent in the semiconductor devices, internal inductance within the smoothing capacitor and semiconductor devices, and the inductance of the respective wires. Thereby, current overlapped with such resonant current flows through the current detection circuit in terms of a current value of the inverter output to be actually detected, so that the precision with which such current value is detected by such detection problematically deteriorates.

To cope with such problem, as disclosed in PTL 1, by the series resonant circuit being split with the third capacitor (snubber capacitor) on the side of the first capacitor (smoothing capacitor) and the second capacitor (snubber capacitor) on the side of the inverter in use, it allows such resonant current to be reduced.

However, there are some cases where such series resonant current might be formed by the current detection circuit and the snubber capacitors as well as the wiring patterns of the inverter circuit board to interconnect such detection circuit and capacitors. In order to reduce such resonant current in this situation, it requires in design that the inductances of such wiring patterns be minimized, to which effect there is no disclosure in PTL 1.

The present invention is to provide a power converter provided with a current detection circuit on a DC bus allowing such resonant current to be reduced and the precision with which such current value is detected by such detection circuit to be enhanced by minimizing the inductances of the wiring patterns of the inverter circuit board.

### Solution to Problem

In order to solve the above issue, the power converter according to the present invention is characteristically exemplified in comprising a DC bus provided with a positive potential and a negative potential; a power semiconductor module which is connected between the DC bus and is provided with a positive terminal and a negative terminal; a first capacitor provided with a positive terminal and a negative terminal; a second capacitor provided with a positive terminal and a negative terminal; and a circuit component which is connected between the power semiconductor module and the second capacitor at either of the positive potential and the negative potential of the DC bus and is provided with a first terminal on a side of the power semiconductor module and a second terminal on a side of the second capacitor, in which the positive terminal of the first capacitor and the positive terminal of the second capacitor, the negative terminal of the first capacitor and the negative terminal of the second capacitor, the positive terminal of the power semiconductor module and the positive terminal of the second capacitor, either the positive terminal or the negative terminal of the power semiconductor module and the first terminal of the circuit component are respectively disposed in the vicinity of each other.

### Advantageous Effects of Invention

A power converter provided with a current detection circuit on a DC bus allows such resonant current to be reduced and the precision with which such current value is detected by such detection circle to be enhanced by minimizing the inductances of the wiring patterns of the inverter circuit board.

### Brief Description of Drawings

Figure 1 illustrates a layout of the inverter circuit board according to Example 1.
Figure 2 illustrates a layout of the inverter circuit board according to Example 2.
Figure 3 illustrates a layout of the inverter circuit board according to Example 3.
Figure 4 illustrates a layout of the inverter circuit board according to Example 4.
Figure 5 illustrates a layout of the inverter circuit board according to Example 5.
Figure 6 illustrates a layout of the inverter circuit board according to Example 6.
Figure 7 illustrates a block diagram of the conventional power converter.
Figure 8 illustrates the circuit structure of the conventional inverter provided with a current detection circuit.
Figure 9 illustrates the first circuit structure to make enhanced the current detection precision of a conventional inverter provided with a current detection circuit.
Figure 10 illustrates the second circuit structure to make enhanced the current detection precision of the conventional inverter provided with a current detection circuit.
Figure 11 illustrates one example of the layout of the inverter circuit board to realize the circuit structure illustrated in Figure 10.

### Description of Embodiments

The examples embodied in the present invention are explained below with reference to the accompanying drawings.

### Example 1

To begin with, explanation is given on the conventional power converter provided with a current detection circuit on a DC bus.

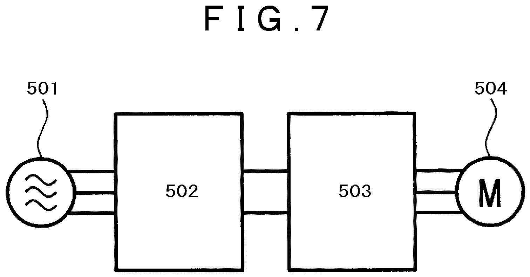

Figure 7 illustrates the driving system of a three-phase AC electric motor employing the conventional three-phase system power source. With reference to Figure 7, an AC electric motor 504 is speed-variably driven by an AC voltage of the three-phase system power source 501 being converted into a DC voltage with a converter 502; and such DC voltage being converted into an AC voltage with an inverter 503. In this way, the converter 502 and the inverter 503 act to convert the modes of power such as DC, AC and frequency with such semiconductor devices as diodes and IGBTs (Insulated Gate Bipolar Transistors) switched on.

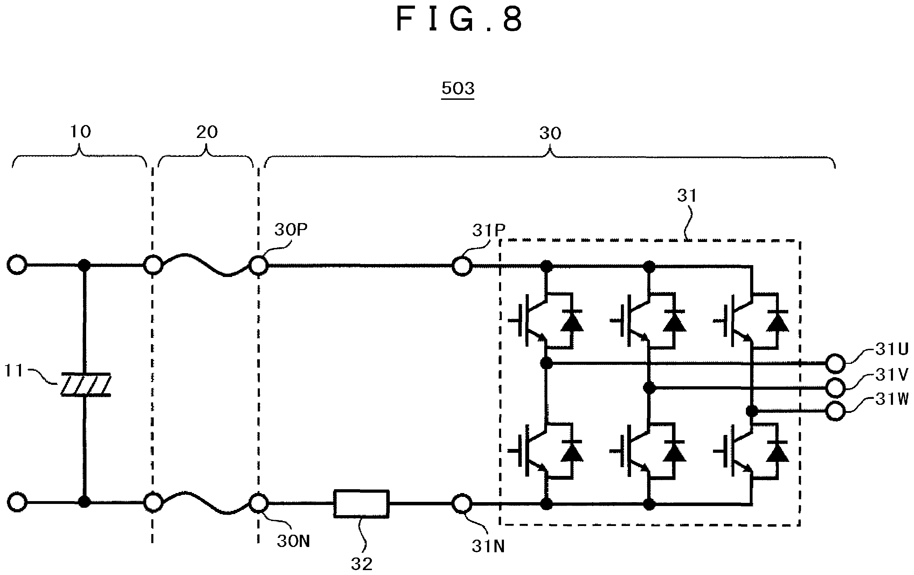

Figure 8 illustrates the circuit structure of the conventional inverter 503. With reference to Figure 8, the inverter 503 mainly comprises a smoothing capacitor 11 to stabilize a DC voltage and a power semiconductor module 31 to convert such DC voltage into an AC voltage. Now, the power semiconductor module 31 is a three-phase bridge circuit in which three circuits each having semiconductor devices connected in series are vertically connected in parallel with one another for generating a three-phase AC voltage. Further, the inverter 503 is provided with a current detection circuit 32 on a DC bus between the smoothing capacitor 11 and the power semiconductor module 31 for calculating a current value of an AC electric motor 504 connected to the outputs 31U, 31V and 31W of the inverter 503. Current taking a sinusoidal form in shape at the inverter outputs 31U, 31V and 31W appears on the DC bus in the current waveform notched with comb teeth. The current detection circuit 32 reads a value of the current appearing on the DC bus in the current waveform notched with comb teeth at an arbitrary timing of control pattern in each phase, thereby, computing the current taking a sinusoidal form in shape in an arbitrary phase at the inverter outputs 31U, 31V and 31W. Moreover, the smoothing capacitor 11 is a capacitor with high capacitance, so that such measures are taken as the smoothing capacitor board 10 and the inverter circuit board 30 being arranged with separate boards; and such boards being connected with each other with a cable 20. Alternatively, if there is a room for enlarging an area occupied by the boards, such measure is taken as the smoothing capacitor 11 being packaged in the inverter circuit board 30.

Upon the semiconductor devices within the power semiconductor module 31 being switched on, resonant current occurs among the smoothing capacitor 11, the cable 20, the wiring patterns of the inverter circuit board 30, the power semiconductor module 31, and the current detection circuit 32. This resonant current is caused by a series resonant circuit being formed with junction capacitance inherent in the semiconductor devices, internal inductance within the smoothing capacitor 11 and the power semiconductor module 31 and the inductance of the respective wires, thereby, current overlapped with such resonant current flowing through the current detection circuit 32 in terms of a current value of the inverter outputs 31U, 31V and 31W respectively to be actually detected. In order to detect such current value employing the current detection circuit 32 with precision, it requires that such current value be acquired in a timely manner in the state where such resonant current is satisfactorily attenuated. However, when such inductances are higher, such resonant current is unsatisfactorily attenuated, so that the precision with which such current value is detected deteriorates.

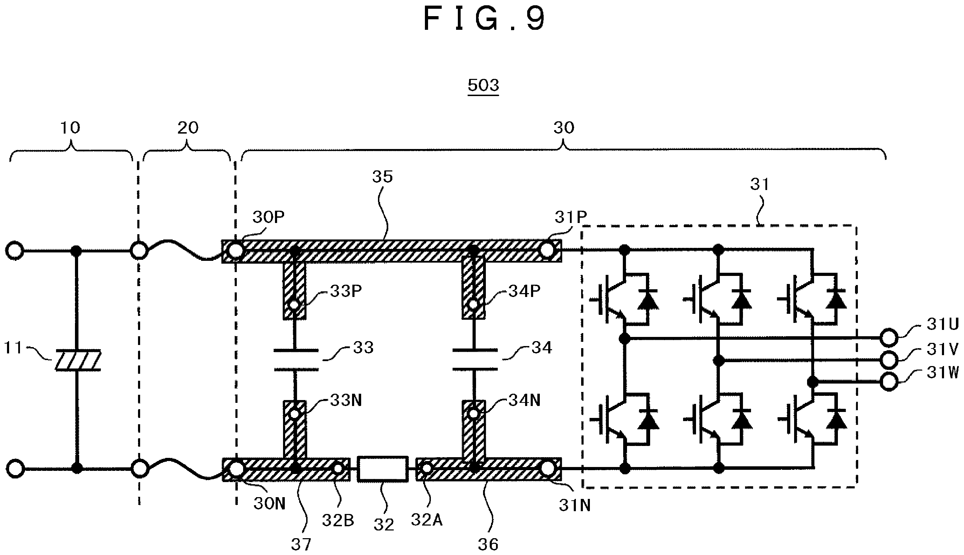

To abate such resonant current or to reduce the inductances of the series resonant current, it is preferred that the smoothing capacitor 11 be disposed in the vicinity of the power semiconductor module 31. Further, as disclosed in PTL 1, by the series resonant circuit being split with the third capacitor (snubber capacitor) on the side of the first capacitor (smoothing capacitor) and the second capacitor (snubber capacitor) on the side of the inverter in use, it allows such resonant current to be reduced. Figure 9 illustrates the same circuit structure as applied in the method disclosed in PTL 1. With respect to the current detection circuit 32, the snubber capacitor 33 on the side of the smoothing capacitor 11 and the snubber capacitor 34 on the side of the power semiconductor module 31 are interconnected between the positive potential and the negative potential of the DC bus. This arrangement permits the resonant current with the smoothing capacitor 11 to be absorbed by the snubber capacitor 33 while that with the power semiconductor module 31 to be absorbed by the snubber capacitor 34. Thus, the resonant current between the smoothing capacitor 11 and the power semiconductor module 31 becomes hard to flow through the current detection circuit 32, so that the precision with which such current value is detected improves.

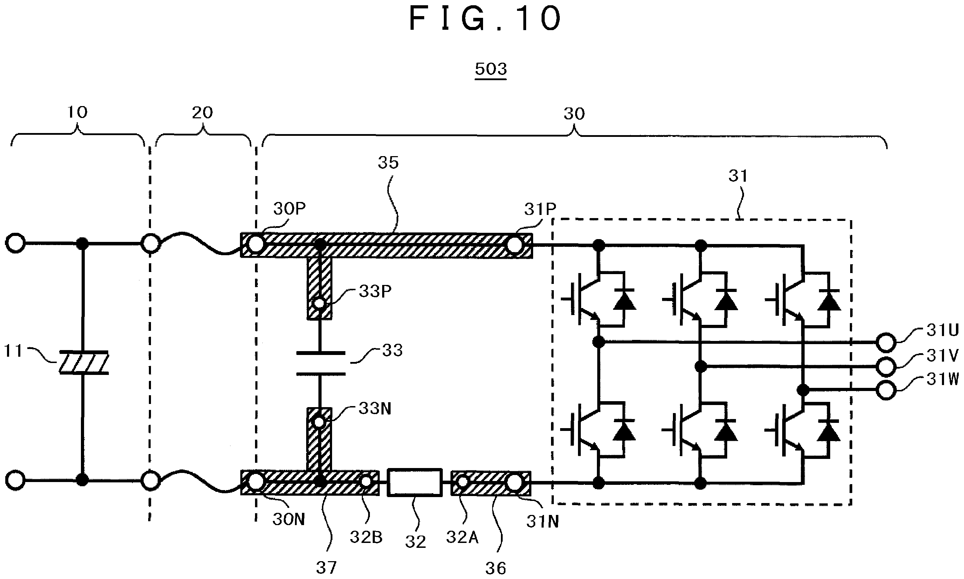

However, there are some cases where such series resonant circuit might be formed by the current detection circuit 32, the snubber capacitor 33 and the snubber capacitor 34 as well as the wiring pattern 35 of the positive potential of the inverter circuit board 30 and the wiring patterns 36 and 37 of the negative potential thereof (hereinafter, such patterns 35, 36 and 37 generally referred to as 'wiring pattern' in some cases) to interconnect such detection circuit and capacitors. In order to abate such resonant current in this situation, it requires in design that the inductances of the wiring patterns 35, 36 and 37 to interconnect such detection circuit and capacitors be reduced. In this regard, since the counter components against such resonant current increases in a case where two snubber capacitors are employed, the method by which the resonant current flowing through the current detection circuit 32 is reduced just with one sunbber capacitor is exemplified in Figure 10. The snubber capacitor 33 is present only on the side of the smoothing capacitor 11 with respect to the current detection circuit 32. The snubber capacitor 33 absorbs both the resonant current with the smoothing capacitor 11 and that with the power semiconductor module 31.

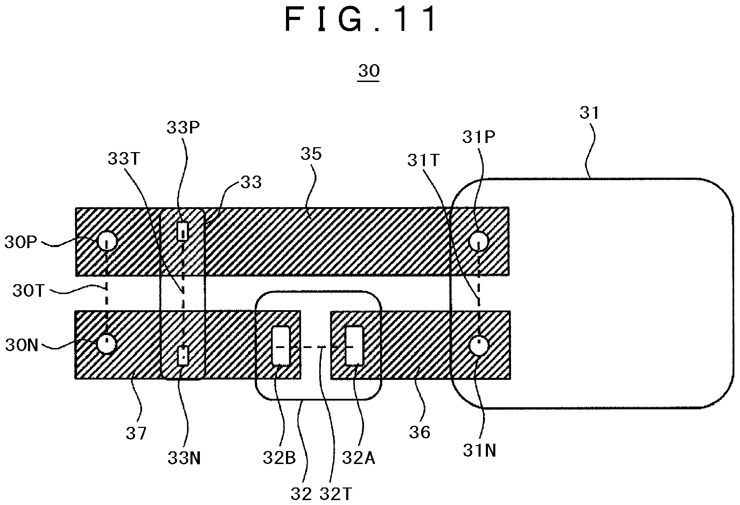

Figure 11 illustrates one example of the layout of the inverter circuit board to realize the circuit structure illustrated in Figure 10. With reference to Figure 11, the power semiconductor module 31 is connected between the wiring pattern 35 of the positive potential and the wiring pattern 36 of the negative potential both extending from the power semiconductor module 31 to the smoothing capacitor 11 and the smoothing capacitor 11 and the snubber capacitor 33 are connected between the wiring pattern 35 of the positive potential and the wiring pattern 37 of the negative potential both extending from the power semiconductor module 31 to the smoothing capacitor 11. The current detection circuit 32 is connected between the power semiconductor module 31 and the snubber capacitor 33 employing the wiring patterns 36 and 37 of the negative potential both extending from the power semiconductor module 31 to the smoothing capacitor 11. The positive terminal 30P of the smoothing capacitor 11 and the positive terminal 33P of the snubber capacitor 33, the negative terminal 30N of the smoothing capacitor 11 and the negative terminal 33N of the snubber capacitor 33, the negative terminal 31N of the power semiconductor module 31 and the first terminal 32A of the current detection circuit 32 and the second terminal 32B of the current detection circuit 32 and the negative terminal 33N of the snubber capacitor 33 are respectively disposed in the vicinity of each other.

When the power semiconductor module 31, the current detection circuit 32, the snubber capacitor 33 and the smoothing capacitor 11are unidirectionally arranged as illustrated in Figure 11, the interval between the positive terminal 31P of the power semiconductor module 31 and the positive terminal 33P of the snubber capacitor 33 is widened. In other words, the inductance of the wiring pattern 35 interconnecting such module and capacitor becomes higher. Thus, the resonant current with the power semiconductor module 31 and the snubber capacitor 33 becomes easy to flow through the current detection circuit 32.

To overcome such problem, explanation is given below with examples on the layouts of the inverter circuit board 30 to reduce the inductance of the wiring patterns 35, 36 and 37 respectively of such circuit board.

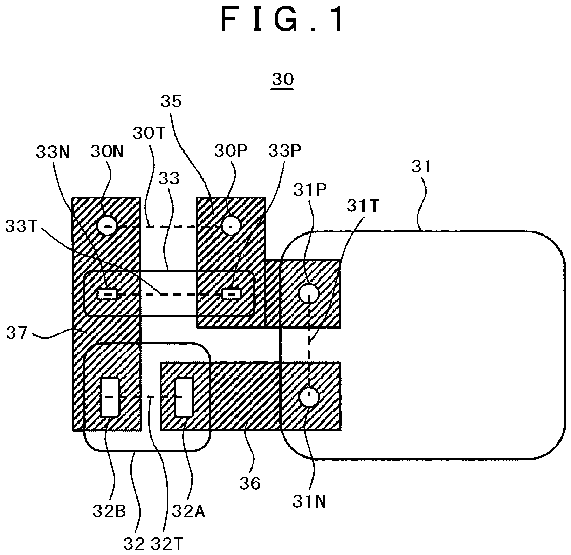

Figure 1 illustrates the layout of the inverter circuit board according to the present example. With reference to Figure 1, the inverter circuit board 30 is e.g. a printed circuit board, in which a DC bus provided with the positive terminal 30P and the negative terminal 30N of the smoothing capacitor 11 and the wiring pattern 35 of the positive potential and the wiring patterns 36 and 37 of the negative potential; the power semiconductor module 31 provided with the positive terminal 31P and the negative terminal 31N; the snubber capacitor 33 provided with the positive terminal 33P and the negative terminal 33N; and the current detection circuit 32 provided with the first terminal 32A and the second terminal 32B are packaged.

The power semiconductor module 31 is connected between the wiring pattern 35 of the positive potential and the wiring pattern 36 of the negative potential of the DC bus while the smoothing capacitor 11 and the snubber capacitor 33 are connected between the wiring pattern 35 of the positive potential and the wiring pattern 37 of the negative potential of the DC bus. The current detection circuit 32 is connected between the power semiconductor module 31 and the snubber capacitor 33 employing the wiring patterns 36 and 37 of the negative potential of the DC bus.

The positive terminal 30P of the smoothing capacitor 11 and the positive terminal 33P of the snubber capacitor 33, the negative terminal 30N of the smoothing capacitor 11 and the negative terminal 33N of the snubber capacitor 33, the positive terminal 31P of the power semiconductor module 31 and the positive terminal 33P of the snubber capacitor 33 and the negative terminal 31N of the power semiconductor module 31 and the first terminal 32A of the current detection circuit 32 are respectively disposed in the vicinity of each other.

Further, the dispositions of such structural components are rephrased as follows. The first prolonged straight line 30T including the positive terminal 30P and the negative terminal 30N of the smoothing capacitor 11, the second prolonged straight line 33T including the positive terminal 33P and the negative terminal 33N of the snubber capacitor 33 and the third prolonged straight line 32T including the first terminal 32A and the second terminal 32B of the current detection circuit 32 are respectively disposed in the vicinity of one another and in parallel with one another. Then ,the first prolonged straight line 30T or the second prolonged straight line 33T or the third prolonged straight line 32T and the fourth prolonged straight line 31T including the positive terminal 31P and the negative terminal 31N of the power semiconductor module 31 are disposed vertically to each other. In this regard, what is referred to as 'prolonged straight line' denotes the straight line in which both ends of the line segment interconnecting e.g. two points or the positive terminal and the negative terminal are prolonged, in other words, more simply, denoting the straight line passing through such two points.

To note, although it is described above that the current detection circuit 32 is connected between the power semiconductor module 31 and the snubber capacitor 33 employing the wiring patterns 36 and 37 of the negative potential of the DC bus, such detection circuit may be connected to either of the positive potential and the negative potential thereof or may be disposed on the side of the positive potential thereof.

Further, the current detection circuit 32 is a shunt resistance type, current transformer type or Hall effect type current sensor.

Moreover, in the present example, explanation is given on how to abate the resonant current so as to improve on the precision with which the current value is detected by the current detection circuit, but the present example is also applicable to common components other than the current detection circuit because abating such resonant current naturally leads to reducing its influence on such components.

As described above, the power converter according to the present example comprises a DC bus provided with a positive potential and a negative potential; a power semiconductor module (31) which is connected between the DC bus and is provided with a positive terminal and a negative terminal; a first capacitor (11) provided with a positive terminal and a negative terminal; a second capacitor (33) provided with a positive terminal and a negative terminal; and a circuit component (32) which is connected between the power semiconductor module and the second capacitor at either of the positive potential and the negative potential of the DC bus and is provided with a first terminal on a side of the power semiconductor module and a second terminal on a side of the second capacitor, in which the positive terminal of the first capacitor and the positive terminal of the second capacitor, the negative terminal of the first capacitor and the negative terminal of the second capacitor, the positive terminal of the power semiconductor module and the positive terminal of the second capacitor, the positive terminal or the negative terminal of the power semiconductor module and the first terminal of the circuit component are respectively disposed in the vicinity of each other.

Further, the first prolonged straight line including the positive terminal and the negative terminal of the first capacitor, the second prolonged straight line including the positive terminal and the negative terminal of the second capacitor, and the third prolonged straight line including the first terminal and the second terminal of the circuit component are disposed in parallel with one another while the fourth prolonged straight line including the positive terminal and the negative terminal of the power semiconductor module and one of the first prolonged straight line, the second prolonged straight line, and the third prolonged straight line are disposed vertically to each other.

In this way, the interval between the positive terminal 30P of the smoothing capacitor 11 and the positive terminal 33P of the snubber capacitor 33 and that between the negative terminal 30N of the smoothing capacitor 11 and the negative terminal 33N of the snubber capacitor 33 become shortened. In other words, the inductances of the wiring patterns 35 and 37 interconnecting such capacitors are minimized, so that the resonant current flowing between the smoothing capacitor 11 and the snubber capacitor 33 can be abated. Further, the interval between the positive terminal 31P of the power semiconductor module 31 and the positive terminal 33P of the snubber capacitor 33, that between the negative terminal 33N of the snubber capacitor 33 and the second terminal 32B of the current detection circuit 32 and the first terminal 32A of the current detection circuit 32 and the negative terminal 31N of the power semiconductor module 31 become shortened. In other words, the inductances of the wiring patterns 35, 36 and 37 respectively interconnecting such module and capacitor, such detection circuit and module, and such capacitor and detection circuit are minimized, so that the resonant current flowing between the power semiconductor module 31 and the snubber capacitor 33 can be abated. Thus, the precision with which the current value is detected by the current detection circuit 32 improves.

### Example 2

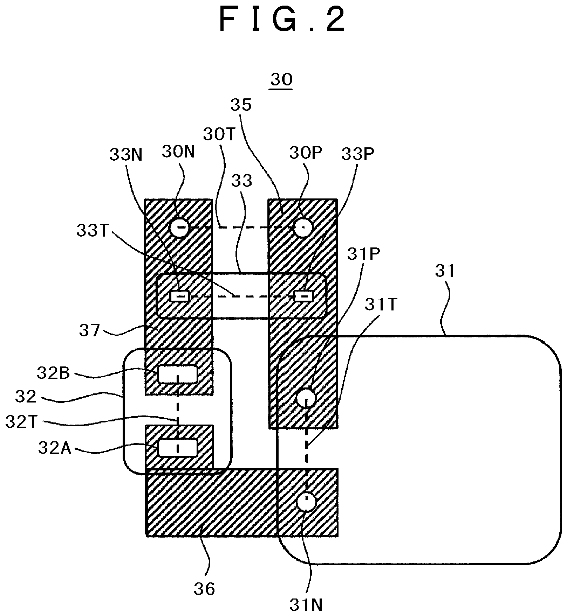

Figure 2 illustrates the layout of the inverter circuit board according to the present example. With reference to Figure 2, the structural components hereof are the same as those of Example 1 illustrated in Figure 1, but they are different from each other in that the wiring pattern 35 of the positive potential of the DC bus is disposed such that it extends vertically upward viewed from right to left with respect to the drawing sheet from the positive terminal 31P of the power semiconductor module 31 and the current detection circuit 32 is shifted vertically upward viewed from right to left with respect to the drawing sheet from the wiring pattern 36 of the negative potential thereof.

In other words, as illustrated in Figure 2, the first prolonged straight line 30T including the positive terminal 30P and the negative terminal 30N of the smoothing capacitor 11 and the second prolonged straight line 33T including the positive terminal 33P and the negative terminal 33N of the snubber capacitor 33 are disposed in the vicinity of each other and in parallel with each other. The third prolonged straight line 32T including the first terminal 32A and the second terminal 32B of the current detection circuit 32 and the fourth prolonged straight line 31T including the positive terminal 31P and the negative terminal 31N of the power semiconductor module 31 are disposed in the vicinity of each other and in parallel with each other. Then, either of the first prolonged straight line 30T and the second prolonged straight line 33T and either of the third prolonged straight line 32T and the fourth prolonged straight line 31T are disposed vertically to each other.

Adopting the dispositions of the wiring pattern and the current detection unit as mentioned above, in addition to the advantageous effects brought by Example 1, especially allows the interval between the negative terminal 33N of the snubber capacitor 33 and the second terminal 32B of the current detection circuit 32 to be shortened, thereby, the inductances of the wiring patterns 35, 36 and 37 being minimized, as the result of which the resonant current flowing between the power semiconductor module 31 and the snubber capacitor 33 can be abated so as to lead to improving on the precision with which the current value is detected by the current detection circuit 32.

### Example 3

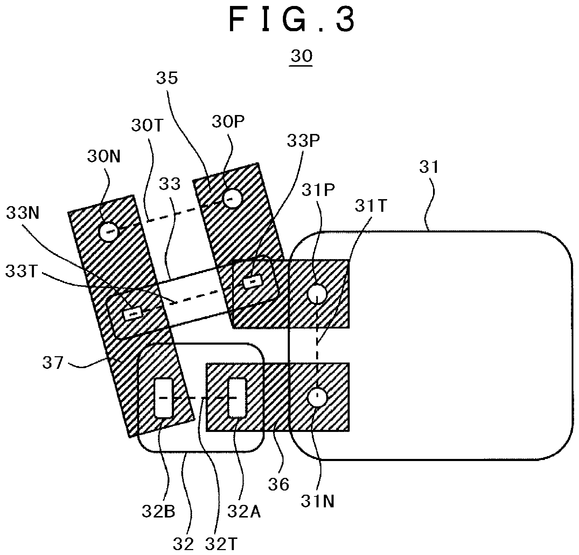

Figure 3 illustrates the layout of the inverter circuit board according to the present example. With reference to Figure 3, the structural components hereof are the same as those of Example 1 illustrated in Figure 1, but there is difference in wiring pattern between them. In other words, the wiring pattern 35 of the positive potential of the DC bus is disposed such that it extends or is pulled out horizontally viewed from up to down with respect to the drawing sheet from the positive terminal 31P of the power semiconductor module 31 and is bent upward viewed from right to left with respect to the drawing sheet into a substantially L shape while the current detection circuit 32 is disposed in the direction extending from the wiring pattern 36 of the negative potential which is disposed such that it extends or is pulled out horizontally viewed from up to down with respect to the drawing sheet from the negative terminal 31N of the power semiconductor module 31.

In other words, as illustrated in Figure 3, the first prolonged straight line 30T including the positive terminal 30P and the negative terminal 30N of the smoothing capacitor 11 and the second prolonged straight line 33T including the positive terminal 33P and the negative terminal 33N of the snubber capacitor 33 are disposed in the vicinity of each other and in parallel with each other. Further, the second prolonged straight line 33T including the positive terminal 33P and the negative terminal 33N of the snubber capacitor 33, the third prolonged straight line 32T including the first terminal 32A and the second terminal 32B of the current detection circuit 32 and the fourth prolonged straight line 31T including the positive terminal 31P and the negative terminal 31N of the power semiconductor module 31 form a triangle among them.

To note, according to the above description, it is shown that the first prolonged straight line 30T including the positive terminal 30P and the negative terminal 30N of the smoothing capacitor 11 is not disposed in parallel with the power semiconductor module 31, but taking it into due account that the positive terminal 30P and the negative terminal 30N of the smoothing capacitor are placed out onto the edge of the inverter circuit board, it is preferred that such first prolonged straight line 30T be disposed in parallel with the power semiconductor module 31. In this case, the first prolonged straight line 30T is disposed in parallel with the power semiconductor module 31 such that the interval between the snubber capacitor 33 and the current detection circuit 32 is smaller than that between the positive terminal 30P and the negative terminal 30N of the smoothing capacitor 11 and the snubber capacitor 33.

Adopting the dispositions of the wiring pattern and the current detection circuit as mentioned above, in addition to the advantageous effects brought by Example 1, especially allows the interval between the negative terminal 33N of the snubber capacitor 33 and the second terminal 32B of the current detection circuit 32 to be shortened, thereby, the inductances of the wiring patterns 35, 36 and 37 being minimized, as the result of which the resonant current flowing between the power semiconductor module 31 and the snubber capacitor 33 can be abated so as to lead to improving on the precision with which the current value is detected by the current detection circuit 32.

### Example 4

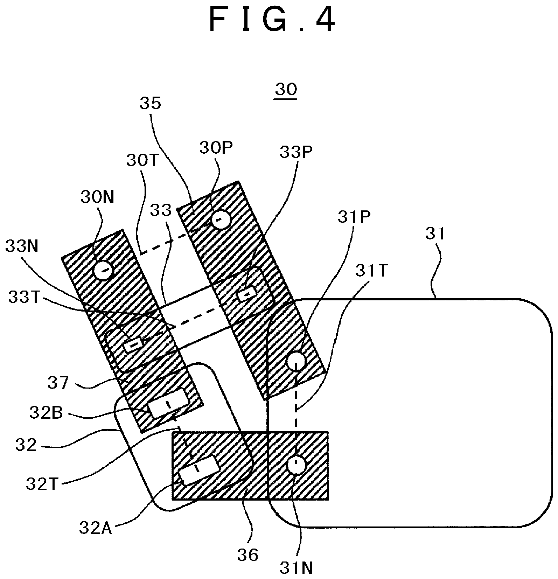

Figure 4 illustrates the layout of the inverter circuit board according to the present example. With reference to Figure 4, the present example is arranged such that the wiring pattern 35 of the positive potential of the DC bus according to Example 3 illustrated in Figure 3 is disposed such that it is pulled out diagonally upward viewed from right to left with respect to the drawing sheet from the positive terminal 31P of the power semiconductor module 31 and the current detection circuit 32 is disposed in the same way as the wiring pattern 35.

The above arrangement allows the negative terminal 33N of the snubber capacitor 33 and the second terminal 32B of the current detection circuit 32 to be disposed further in the vicinity of each other.

### Example 5

In the present example, explanation is given on the layout of the inverter circuit board corresponding to the circuit structure illustrated in Figure 9 employing two snubber capacitors.

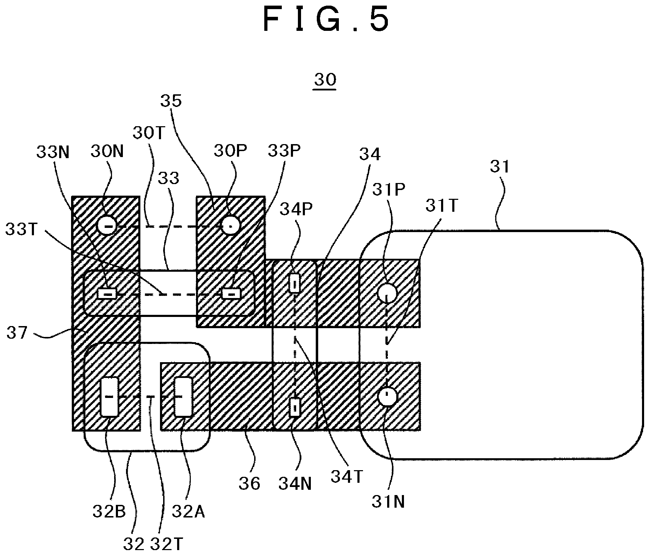

Figure 5 illustrates the layout of the inverter circuit board according to the present example. In the inverter circuit board 30 illustrated in Figure 5, the DC bus provided with the positive terminal 30P and the negative terminal 30N of the smoothing capacitor 11 and the wiring pattern 35 of the positive potential and the wiring patterns 36 and 37 of the negative potential; the power semiconductor module 31 provided with the positive terminal 31P and the negative terminal 31N; a snubber capacitor 33 provided with the positive terminal 33P and the negative terminal 33N; a snubber capacitor 34 provided with the positive terminal 34P and the negative terminal 34N; and the current detection circuit 32 provided with the first terminal 32A and the second terminal 32B are packaged.

The power semiconductor module 31 and the snubber capacitor 34 are connected between the wiring pattern 35 of the positive potential of the DC bus and the wiring pattern 36 of the negative potential thereof while the smoothing capacitor 11 and the snubber capacitor 33 are connected between the wiring pattern 35 of the positive potential of the DC bus and the wiring pattern 37 of the negative potential thereof. The current detection circuit 32 is connected between the snubber capacitor 33 and the snubber capacitor 34 employing the wiring patterns 36 and 37 of the negative potential of the DC bus.

The positive terminal 30P of the smoothing capacitor 11 and the positive terminal 33P of the snubber capacitor 33, the negative terminal 30N of the smoothing capacitor 11 and the negative terminal 33N of the snubber capacitor 33, the positive terminal 31P of the power semiconductor module 31 and the positive terminal 34P of the snubber capacitor 34, the negative terminal 31N of the power semiconductor module 31 and the negative terminal 34N of the snubber capacitor 34, the positive terminal 34P of the snubber capacitor 34 and the positive terminal 33P of the snubber capacitor 33, and the negative terminal 34N of the snubber capacitor 34 and the first terminal 32A of the current detection circuit 32 are respectively disposed in the vicinity of each other.

Further, the dispositions of such structural components are rephrased as follows. The first prolonged straight line 30T including the positive terminal 30P and the negative terminal 30N of the smoothing capacitor 11, the second prolonged straight line 33T including the positive terminal 33P and the negative terminal 33N of the snubber capacitor 33 and the third prolonged straight line 32T including the first terminal 32A and the second terminal 32B of the current detection circuit 32 are disposed in the vicinity of one another and in parallel with one another. The fourth prolonged straight line 31T including the positive terminal 31P and the negative terminal 31N of the power semiconductor module 31 and the fifth prolonged straight line 34T including the positive terminal 34P and the negative terminal 34N of the snubber capacitor 34 are disposed in the vicinity of one another and in parallel with one another. Then, the first prolonged straight line 30T or the second prolonged straight line 33T or the third prolonged straight line 32T and the fourth prolonged straight line 31T or the fifth prolonged straight line 34T are disposed vertically to each other.

As described above, the power converter according to the present example comprises a DC bus provided with a positive potential and a negative potential; a power semiconductor module (31) which is connected between the DC bus and is provided with a positive terminal and a negative terminal; a first capacitor (11) provided with a positive terminal and a negative terminal; a second capacitor (33) provided with a positive terminal and a negative terminal; a third capacitor (34) provided with a positive terminal and a negative terminal; and a circuit component (32) which is connected between the second capacitor and the third capacitor at either of the positive potential and the negative potential of the DC bus and is provided with a first terminal on a side of the third capacitor and a second terminal on a side of the second capacitor, in which the positive terminal of the first capacitor and the positive terminal of the second capacitor, the negative terminal of the first capacitor and the negative terminal of the second capacitor, the positive terminal of the power semiconductor module and the positive terminal of the third capacitor, the negative terminal of the power semiconductor module and the negative terminal of the third capacitor, the positive terminal of the third capacitor and the positive terminal of the second capacitor and the positive terminal or the negative terminal of the third capacitor and the first terminal of the circuit component are respectively disposed in the vicinity of each other.

Further, the first prolonged straight line including the positive terminal and the negative terminal of the first capacitor, the second prolonged straight line including the positive terminal and the negative terminal of the second capacitor and the third prolonged straight line including the first terminal and the second terminal of the circuit component are disposed in parallel with one another while the fourth prolonged straight line including the positive terminal and the negative terminal of the third capacitor and the fifth prolonged straight line including the positive terminal and the negative terminal of the power semiconductor module are disposed in parallel with each other, and the first prolonged straight line or the second prolonged straight line or the third prolonged straight line and the fourth prolonged straight line or the fifth prolonged straight line are disposed vertically to each other.

The above dispositional arrangement allows the interval between the positive terminal 30P of the smoothing capacitor 11 and the positive terminal 33P of the snubber capacitor 33 and that between the negative terminal 30N of the smoothing capacitor 11 and the negative terminal 33N of the snubber capacitor 33 to be shortened. In other words, the inductances of the wiring patterns 35 and 37 interconnecting such capacitors are minimized, so that the resonant current flowing between the smoothing capacitor 11 and the snubber capacitor 33 can be abated. Further, the interval between the positive terminal 31P of the power semiconductor module 31 and the positive terminal 34P of the snubber capacitor 34 and that between the negative terminal 34N of the snubber capacitor 34 and the negative terminal 31N of the power semiconductor module 31 become shortened. In other words, the inductances of the wiring patterns 35 and 36 interconnecting such module and capacitor are minimized, so that the resonant current flowing between the power semiconductor module 31 and the snubber capacitor 33 can be abated. Moreover, the interval between the positive terminal 33P of the snubber capacitor 33 and the positive terminal 34P of the snubber capacitor 34, that between the negative terminal 34N of the snubber capacitor 34 and the first terminal 32A of the current detection circuit 32 and that between the second terminal 32B of the current detection circuit 32 and the negative terminal 33N of the snubber capacitor 33 become shortened. In other words, the inductances of the wiring patterns 35, 36, and 37 interconnecting them are minimized, so that the resonant current flowing among the snubber capacitor 33, the snubber capacitor 34 and the current detection circuit 32 can be abated. Thus, the precision with which the current value is detected by the current detection circuit 32 improves.

### Example 6

In the present example, explanation is given on another layout of the inverter circuit board corresponding to the circuit structure illustrated in Figure 9 employing two snubber capacitors.

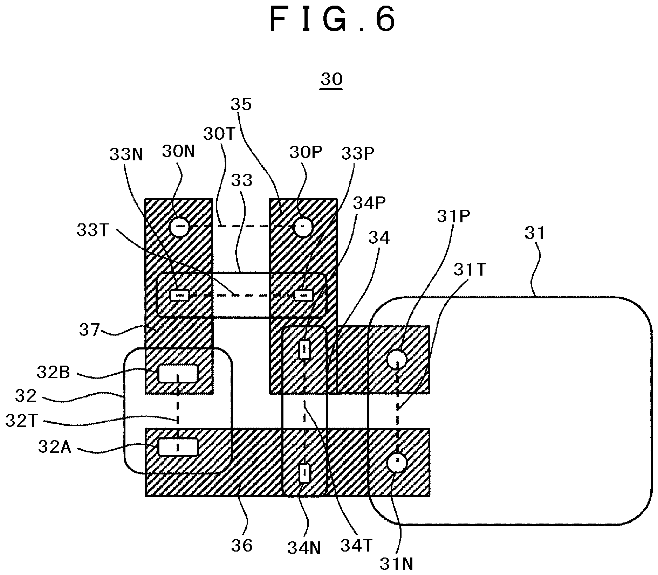

Figure 6 illustrates the layout of the inverter circuit board according to the present example. With reference to Figure 6, the structural components hereof are the same as those of Example 5 illustrated in Figure 5, but they are different from each other in that the wiring pattern 35 of the positive potential of the DC bus is disposed such that it extends vertically viewed from right to left with reference to the drawing sheet from the positive terminal 34P of the snubber capacitor 34 and the current detection circuit 32 is disposed upward from right to left with reference to the drawing sheet from the wiring pattern 36 of the negative potential thereof.

In other words, as illustrated in Figure 6, the first prolonged straight line 30T including the positive terminal 30P and the negative terminal 30N of the smoothing capacitor 11 and the second prolonged straight line 33T including the positive terminal 33P and the negative terminal 33N of the snubber capacitor 33 are disposed in the vicinity of each other and in parallel with each other. The third prolonged straight line 32T including the first terminal 32A and the second terminal 32B of the current detection circuit 32, the fourth prolonged straight line 31T including the positive terminal 31P and the negative terminal 31N of the power semiconductor module 31 and the fifth prolonged straight line 34T including the positive terminal 34P and the negative terminal 34N of the snubber capacitor 34 are disposed in the vicinity of one another and in parallel with one another. Then, the first prolonged straight line 30T or the second prolonged straight line 33T and the third prolonged straight line 32T or the fourth prolonged straight line 31T or the fifth prolonged straight line 34T are disposed vertically to each other.

To note, as illustrated in Figures 3 and 4 according to Examples 3 and 4, the wiring pattern 35 of the positive potential of the DC bus and the wiring pattern 37 of the negative potential thereof may be disposed diagonally upward viewed from up to down with respect to the drawing sheet such that the second prolonged straight line 33T including the positive terminal 33P and the negative terminal 33N of the snubber capacitor 33, the third prolonged straight line 32T including the first terminal 32A and the second terminal 32B of the current detection circuit 32 and the fifth prolonged straight line 34T including the positive terminal 34P and the negative terminal 34N of the snubber capacitor 34 form a triangle among them.

Adopting the dispositions of the wiring pattern and the current detection circuit as mentioned above, in addition to the advantageous effects brought by Example 5, especially allows the interval between the negative terminal 33N of the snubber capacitor 33 and the second terminal 32B of the current detection circuit 32 to be shortened, thereby, the inductances of the wiring patters 35, 36 and 37 being minimized, as the result of which the resonant current flowing among the snubber capacitor 33, the snubber capacitor 34 and the current detection circuit 32 can be abated, which leads to improving on the precision with which the current value is detected by the current detection circuit 32.

In the above description, various examples according to the present invention have been presented, but the present invention is not limited to such examples or may be modified into various manners. For instance, the detailed examples presented herein are just intended for facilitating the persons skilled in the art to understand the present invention, so that the present invention is not necessarily limited to what embodies all the features presented herein. In addition, a part of the features according to a certain example may be replaced with those of the other examples or the features of the other examples may be added to those of a certain example. Reference Signs List

10... smoothing capacitor board
11... smoothing capacitor
20... cable
30... inverter circuit board
30P... positive terminal of smoothing capacitor
30N... negative terminal of smoothing capacitor
30T... first prolonged straight line
31... power semiconductor module
31P... positive terminal of power semiconductor module
31N... negative terminal of power semiconductor module
31T... fourth prolonged straight line
31U, 31V and 31W... inverter output terminal
32... current detection circuit
32A... first terminal of current detection circuit
32B... second terminal of current detection circuit
32T... third prolonged straight line
33, 34... snubber capacitor
33P, 34P... positive terminal of snubber capacitor
33N, 34N... negative terminal of snubber capacitor
33T... second prolonged straight line
34T... fifth prolonged straight line
35... wiring pattern of positive potential
36, 37... wiring pattern of negative potential
501... three-phase system power source
502... converter
503... inverter
504... AC electric motor

## Claims

1. A power converter comprising:
a DC bus provided with a positive potential and a negative potential;
a power semiconductor module which is connected between the DC bus and is provided with a positive terminal and a negative terminal; a first capacitor provided with a positive terminal and a negative terminal; a second capacitor provided with a positive terminal and a negative terminal; and
a circuit component which is connected between the power semiconductor module and the second capacitor at one of the positive potential and the negative potential of the DC bus and is provided with a first terminal on a side of the power semiconductor module and a second terminal on a side of the second capacitor,
wherein the positive terminal of the first capacitor and the positive terminal of the second capacitor, the negative terminal of the first capacitor and the negative terminal of the second capacitor, the positive terminal of the power semiconductor module and the positive terminal of the second capacitor, and one of the positive terminal and the negative terminal of the power semiconductor module and the first terminal of the circuit component are respectively disposed in a vicinity of each other.

2. The power converter according to claim 1,
wherein a first prolonged straight line including the positive terminal and the negative terminal of the first capacitor, a second prolonged straight line including the positive terminal and the negative terminal of the second capacitor, and a third prolonged straight line including the first terminal and the second terminal of the circuit component are disposed in parallel with one another; and
a fourth prolonged straight line including the positive terminal and the negative terminal of the power semiconductor module and one of the first prolonged straight line, the second prolonged straight line, and the third prolonged straight line are disposed vertically to each other.

3. The power converter according to claim 1,
wherein the first prolonged straight line including the positive terminal and the negative terminal of the first capacitor and the second prolonged straight line including the positive terminal and the negative terminal of the second capacitor are disposed in parallel with each other;
the third prolonged straight line including the first terminal and the second terminal of the circuit component and the fourth prolonged straight line including the positive terminal and the negative terminal of the power semiconductor module are disposed in parallel with each other; and
one of the first prolonged straight line and the second prolonged straight line and one of the third prolonged straight line and the fourth prolonged straight line are disposed vertically to each other.

4. The power converter according to claim 1,
wherein the second prolonged straight line including the positive terminal and the negative terminal of the second capacitor, the third prolonged straight line including the first terminal and the second terminal of the circuit component, and the fourth prolonged straight line including the positive terminal and the negative terminal of the power semiconductor module are disposed such that they form a triangle among them.

5. The power converter according to claim 1,
wherein it is arranged such that an interval between the second capacitor and the circuit component is smaller than an interval between the positive terminal and the negative terminal of the first capacitor and the second capacitor.

6. A power converter comprising:
a DC bus provided with a positive potential and a negative potential;
a power semiconductor module which is connected between the DC bus and is provided with a positive terminal and a negative terminal; a first capacitor provided with a positive terminal and a negative terminal; a second capacitor provided with a positive terminal and a negative terminal; a third capacitor provided with a positive terminal and a negative terminal; and
a circuit component which is connected between the second capacitor and the third capacitor at one of the positive potential and the negative potential of the DC bus and is provided with a first terminal on a side of the third capacitor and a second terminal on a side of the second capacitor,
wherein the positive terminal of the first capacitor and the positive terminal of the second capacitor, the negative terminal of the first capacitor and the negative terminal of the second capacitor, the positive terminal of the power semiconductor module and the positive terminal of the third capacitor, the negative terminal of the power semiconductor module and the negative terminal of the third capacitor, the positive terminal of the third capacitor and the positive terminal of the second capacitor, and one of the positive terminal and the negative terminal of the third capacitor and the first terminal of the circuit component are respectively disposed in a vicinity of each other.

7. The power converter according to claim 6,
wherein a first prolonged straight line including the positive terminal and the negative terminal of the first capacitor, a second prolonged straight line including the positive terminal and the negative terminal of the second capacitor, and a third prolonged straight line including the first terminal and the second terminal of the circuit component are disposed in parallel with one another;
a fourth prolonged straight line including the positive terminal and the negative terminal of the third capacitor and a fifth prolonged straight line including the positive terminal and the negative terminal of the power semiconductor module are disposed in parallel with each other; and
one of the first prolonged straight line, the second prolonged straight line, and the third prolonged straight line and one of the fourth prolonged straight line and the fifth prolonged straight line are disposed vertically to each other.

8. The power converter according to claim 6,
wherein the first prolonged straight line including the positive terminal and the negative terminal of the first capacitor and the second prolonged straight line including the positive terminal and the negative terminal of the second capacitor are disposed in parallel with each other;
the third prolonged straight line including the first terminal and the second terminal of the circuit component, the fourth prolonged straight line including the positive terminal and the negative terminal of the third capacitor, and the fifth prolonged straight line including the positive terminal and the negative terminal of the power semiconductor module are disposed in parallel with one another; and
one of the first prolonged straight line and the second prolonged straight line and one of the third prolonged straight line, the fourth prolonged straight line, and the fifth prolonged straight line are disposed vertically to each other.

9. The power converter according to claim 6,
wherein the second prolonged straight line including the positive terminal and the negative terminal of the second capacitor, the third prolonged straight line including the first terminal and the second terminal of the circuit component, and the fourth prolonged straight line including the positive terminal and the negative terminal of the third capacitor are disposed such that they form a triangle among them.

10. The power converter according to claim 6,
wherein it is arranged such that an interval between the second capacitor and the circuit component is smaller than an interval between the positive terminal and the negative terminal of the first capacitor and the second capacitor.

11. The power converter according to any one of claims 1 to 5,
wherein the first capacitor is a smoothing capacitor;
the second capacitor is a snubber capacitor; and
the circuit component is a current detection circuit.

12. The power converter according to any one of claims 6 to 10,
wherein the first capacitor is a smoothing capacitor;
the second and third capacitors are snubber capacitors; and
the circuit component is a current detection circuit.

## Amended claims

### Amended claims under Art. 19.1 PCT

**1.** (Amended)
A power converter comprising:
a DC bus provided with a positive potential and a negative potential;
a power semiconductor module which is connected between the DC bus and is provided with a positive terminal and a negative terminal; a first capacitor provided with a positive terminal and a negative terminal; a second capacitor provided with a positive terminal and a negative terminal; and
a circuit component which is connected between the power semiconductor module and the second capacitor at one of the positive potential and the negative potential of the DC bus and is provided with a first terminal on a side of the power semiconductor module and a second terminal on a side of the second capacitor,
wherein the positive terminal of the first capacitor and the positive terminal of the second capacitor, the negative terminal of the first capacitor and the negative terminal of the second capacitor, the positive terminal of the power semiconductor module and the positive terminal of the second capacitor, and one of the positive terminal and the negative terminal of the power semiconductor module and the first terminal of the circuit component are respectively disposed in a vicinity of each other,
a first prolonged straight line including the positive terminal and the negative terminal of the first capacitor, a second prolonged straight line including the positive terminal and the negative terminal of the second capacitor, and a third prolonged straight line including the first terminal and the second terminal of the circuit component are disposed in parallel with one another; and
a fourth prolonged straight line including the positive terminal and the negative terminal of the power semiconductor module and one of the first prolonged straight line, the second prolonged straight line, and the third prolonged straight line are disposed vertically to each other.

**2.** (Amended)
A power converter comprising:
a DC bus provided with a positive potential and negative potential;
a power semiconductor module which is connected between the DC bus and is provided with a positive terminal and a negative terminal; a first capacitor provided with a positive terminal and a negative terminal; a second capacitor provided with a positive terminal and a negative terminal; and
a circuit component which is connected between the power semiconductor module and the second capacitor at one of the positive potential and the negative potential of the DC bus and is provided with a first terminal on a side of the power semiconductor module and a second terminal on a side of the second capacitor,
wherein the positive terminal of the first capacitor and the positive terminal of the second capacitor, the negative terminal of the first capacitor and the negative terminal of the second capacitor, the positive terminal of the power semiconductor module and the positive terminal of the second capacitor, and one of the positive terminal and the negative terminal of the power semiconductor module and the first terminal of the circuit component are respectively disposed in a vicinity of each other,
a first prolonged straight line including the positive terminal and the negative terminal of the first capacitor and a second prolonged straight line including the positive terminal and the negative terminal of the second capacitor are disposed in parallel with each other;
a third prolonged straight line including the first terminal and the second terminal of the circuit component and a fourth prolonged straight line including the positive terminal and the negative terminal of the power semiconductor module are disposed in parallel with each other; and
one of the first prolonged straight line and the second prolonged straight line and one of the third prolonged straight line and the fourth prolonged straight line are disposed vertically to each other.

**3.** (Amended)
A power converter comprising:
a DC bus provided with a positive potential and a negative potential;
a power semiconductor module which is connected between the DC bus and is provided with a positive terminal and a negative terminal; a first capacitor provided with a positive terminal and a negative terminal; a second capacitor provided with a positive terminal and a negative terminal; and
a circuit component which is connected between the power semiconductor module and the second capacitor at one of the positive potential and the negative potential of the DC bus and is provided with a first terminal on a side of the power semiconductor module and a second terminal on a side of the second capacitor,
wherein the positive terminal of the first capacitor and the positive terminal of the second capacitor, the negative terminal of the first capacitor and the negative terminal of the second capacitor, the positive terminal of the power semiconductor module and the positive terminal of the second capacitor, and one of the positive terminal and the negative terminal of the power semiconductor module and the first terminal of the circuit component are respectively disposed in a vicinity of each other, and
a second prolonged straight line including the positive terminal and the negative terminal of the second capacitor, a third prolonged straight line including the first terminal and the second terminal of the circuit component, and a fourth prolonged straight line including the positive terminal and the negative terminal of the power semiconductor module are disposed such that they form a triangle among them.

**4.** (Amended)
The power converter according to any one of claims 1 to 3,
wherein it is arranged such that an interval between the second capacitor and the circuit component is smaller than an interval between the positive terminal and the negative terminal of the first capacitor and the second capacitor.

**5.** (Amended)
A power converter comprising:
a DC bus provided with a positive potential and a negative potential;
a power semiconductor module which is connected between the DC bus and is provided with a positive terminal and a negative terminal; a first capacitor provided with a positive terminal and a negative terminal; a second capacitor provided with a positive terminal and a negative terminal; a third capacitor provided with a positive terminal and a negative terminal; and
a circuit component which is connected between the second capacitor and the third capacitor at one of the positive potential and the negative potential of the DC bus and is provided with a first terminal on a side of the third capacitor and a second terminal on a side of the second capacitor,
wherein the positive terminal of the first capacitor and the positive terminal of the second capacitor, the negative terminal of the first capacitor and the negative terminal of the second capacitor, the positive terminal of the power semiconductor module and the positive terminal of the third capacitor, the negative terminal of the power semiconductor module and the negative terminal of the third capacitor, the positive terminal of the third capacitor and the positive terminal of the second capacitor, and one of the positive terminal and the negative terminal of the third capacitor and the first terminal of the circuit component are respectively disposed in a vicinity of each other,
a first prolonged straight line including the positive terminal and the negative terminal of the first capacitor, a second prolonged straight line including the positive terminal and the negative terminal of the second capacitor, and a third prolonged straight line including the first terminal and the second terminal of the circuit component are disposed in parallel with one another;
a fourth prolonged straight line including the positive terminal and the negative terminal of the third capacitor and a fifth prolonged straight line including the positive terminal and the negative terminal of the power semiconductor module are disposed in parallel with each other; and
one of the first prolonged straight line, the second prolonged straight line, and the third prolonged straight line and one of the fourth prolonged straight line and the fifth prolonged straight line are disposed vertically to each other.

**6.** (Amended)
A power converter comprising:
a DC bus provided with a positive potential and a negative potential;
a power semiconductor module which is connected between the DC bus and is provided with a positive terminal and a negative terminal; a first capacitor provided with a positive terminal and a negative terminal; a second capacitor provided with a positive terminal and a negative terminal; a third capacitor provided with a positive terminal and a negative terminal; and a circuit component which is connected between the second capacitor and the third capacitor at one of the positive potential and the negative potential of the DC bus and is provided with a first terminal on a side of the third capacitor and a second terminal on a side of the second capacitor,
wherein the positive terminal of the first capacitor and the positive terminal of the second capacitor, the negative terminal of the first capacitor and the negative terminal of the second capacitor, the positive terminal of the power semiconductor module and the positive terminal of the third capacitor, the negative terminal of the power semiconductor module and the negative terminal of the third capacitor, the positive terminal of the third capacitor and the positive terminal of the second capacitor, and one of the positive terminal and the negative terminal of the third capacitor and the first terminal of the circuit component are respectively disposed in a vicinity of each other,
a first prolonged straight line including the positive terminal and the negative terminal of the first capacitor and a second prolonged straight line including the positive terminal and the negative terminal of the second capacitor are disposed in parallel with each other; a third prolonged straight line including the first terminal and the second terminal of the circuit component, a fourth prolonged straight line including the positive terminal and the negative terminal of the third capacitor and a fifth prolonged straight line including the positive terminal and the negative terminal of the power semiconductor module are disposed in parallel with one another; and
one of the first prolonged straight line and the second prolonged straight line and one of the third prolonged straight line, the fourth prolonged straight line, and the fifth prolonged straight line are disposed vertically to each other.

**7.** (Amended)
A power converter comprising:
a DC bus provided with a positive potential and a negative potential;
a power semiconductor module which is connected between the DC bus and is provided with a positive terminal and a negative terminal; a first capacitor provided with a positive terminal and a negative terminal; a second capacitor provided with a positive terminal and a negative terminal; a third capacitor provided with a positive terminal and a negative terminal; and
a circuit component which is connected between the second capacitor and the third capacitor at one of the positive potential and the negative potential of the DC bus and is provided with a first terminal on a side of the third capacitor and a second terminal on a side of the second capacitor,
wherein the positive terminal of the first capacitor and the positive terminal of the second capacitor, the negative terminal of the first capacitor and the negative terminal of the second capacitor, the positive terminal of the power semiconductor module and the positive terminal of the third capacitor, the negative terminal of the power semiconductor module and the negative terminal of the third capacitor, the positive terminal of the third capacitor and the positive terminal of the second capacitor, and one of the positive terminal and the negative terminal of the third capacitor and the first terminal of the circuit component are respectively disposed in a vicinity of each other, and
a second prolonged straight line including the positive terminal and the negative terminal of the second capacitor, a third prolonged straight line including the first terminal and the second terminal of the circuit component, and a fourth prolonged straight line including the positive terminal and the negative terminal of the third capacitor are disposed such that they form a triangle among them.

**8.** (Amended)
The power converter according to any one of claims 5 to 7,
wherein it is arranged such that an interval between the second capacitor and the circuit component is smaller than an interval between the positive terminal and the negative terminal of the first capacitor and the second capacitor.

**9.** (Amended)
The power converter according to any one of claims 1 to 4,
wherein the first capacitor is a smoothing capacitor;
the second capacitor is a snubber capacitor; and the circuit component is a current detection circuit.

**10.** (Amended)
The power converter according to any one of claims 5 to 8,
wherein the first capacitor is a smoothing capacitor;
the second and third capacitors are snubber capacitors; and
the circuit component is a current detection circuit.

**11.** Cancelled)

**12.** Cancelled)

Statement under Art. 19.1 PCT

As for the amended claim 1, the subject matter recited in claim 2 as originally filed is modified into an independent form.
As for the amended claim 2, the subject matter recited in claim 3 as originally filed is modified into an independent form.
As for the amended claim 3, the subject matter recited in claim 4 as originally filed is modified into an independent form.
As for the amended claim 4, the dependency of the subject matter recited in claim 5 as originally filed is modified into depending from any one of the amended claims 1 to 3.
As for the amended claim 5, the subject matter recited in claim 7 as originally filed is modified into an independent form.
As for the amended claim 6, the subject matter recited in claim 8 as originally filed is modified into an independent form.
As for the amended claim 7, the subject matter recited in claim 9 as originally filed is modified into an independent form.
As for the amended claim 8, the dependency of the subject matter recited in claim 10 as originally filed is modified into depending from any one of the amended claims 5 to 7.
As for the amended claim 9, the dependency of the subject matter recited in claim 11 as originally filed is modified into depending from any one of the amended claims 1 to 4.
As for the amended claim 10, the dependency of the subject matter recited in claim 12 as originally filed is modified into depending from any one of the amended claims 5 to 8.
